(19) Europäisches Patentamt
European Patent Office
Office européen des brevets

(11) **EP 4 524 517 B1**

(12) **EUROPÄISCHE PATENTSCHRIFT**

(45) Veröffentlichungstag und Bekanntmachung des Hinweises auf die Patenterteilung:
**22.04.2026   Patentblatt 2026/17**

(21) Anmeldenummer: **24181876.4**

(22) Anmeldetag: **13.06.2024**

(51) Internationale Patentklassifikation (IPC):
**G01D 5/38** (2006.01)

(52) Gemeinsame Patentklassifikation (CPC):
**G01D 5/38**

(54) **POSITIONSMESSSYSTEM**

POSITION MEASURING SYSTEM

SYSTÈME DE MESURE DE POSITION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.09.2023   DE 102023208964**

(43) Veröffentlichungstag der Anmeldung:
**19.03.2025   Patentblatt 2025/12**

(73) Patentinhaber: **Dr. Johannes Heidenhain GmbH 83301 Traunreut (DE)**

(72) Erfinder:
• HOLZAPFEL, Wolfgang
  83119 Obing (DE)
• STEPPUTAT, Michael
  83278 Traunstein (DE)

(56) Entgegenhaltungen:
WO-A1-01/38828        DE-A1- 102008 007 319
US-B2- 10 670 431

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

GEBIET DER TECHNIK

Die vorliegende Erfindung betrifft ein Positionsmesssystem zur Bestimmung räumlicher Positionsinformationen.

STAND DER TECHNIK

Aus der WO 01/38828 A1 ist ein optisches Positionsmesssystem bekannt, das als räumliches 2D-Winkelmesssystem ausgebildet und zur Bestimmung räumlicher Positionsinformationen nutzbar ist. Das Positionsmesssystem umfasst einerseits eine Sendeeinheit, die an einem im Raum beweglichen Messobjekt angeordnet ist, dessen räumliche Position und Orientierung (Pose) zu bestimmen ist; als Sendeeinheit kann z.B. eine geeignete Lichtquelle fungieren. Stationär gegenüber der beweglichen Sendeeinheit sind andererseits ein oder mehrere optische Empfangseinheiten vorgesehen, die im Wesentlichen jeweils ein Abtastgitter sowie eine optoelektronische Detektoranordnung aufweisen, deren lichtempfindliche Flächen in Richtung des Abtastgitters orientiert sind. Mit Hilfe eines derartigen Systems kann über eine sogenannte Multiangulation die Position der Sendeeinheit im Raum bestimmt werden. Hierzu wird von der jeweiligen Empfangseinheit aus gesehen die Richtung der Sichtlinie zur Sendeeinheit über zwei Winkelmessungen bestimmt. Bei einer bekannten Relativposition zweier Empfangseinheiten lässt sich aus dem Schnittpunkt der bestimmten Sichtlinien die Position der Sendeeinheit ermitteln. Dieses Messprinzip lässt sich durch die Hinzunahme weiterer Sendeeinheiten erweitern, so dass über entsprechende Messungen auch die räumliche Pose von Sendeeinheiten bestimmbar ist. Hinsichtlich weiterer Einzelheiten eines derartigen Messprinzips sei ausdrücklich auf die genannte Druckschrift verwiesen.

ZUSAMMENFASSUNG DER ERFINDUNG

Der vorliegenden Erfindung liegt die Aufgabe zugrunde, das gattungsgemäße Positionsmesssystem im Hinblick auf die Signalerzeugung zu optimieren und damit die Genauigkeit der Positionsmessung zu steigern.
Diese Aufgabe wird erfindungsgemäß durch ein Positionsmesssystem mit den Merkmalen des Anspruchs 1 gelöst.
Vorteilhafte Ausführungen des erfindungsgemäßen Positionsmesssystems ergeben sich aus den Maßnahmen, die in den abhängigen Ansprüchen aufgeführt sind.
Das erfindungsgemäße Positionsmesssystem dient zur Bestimmung räumlicher Positionsinformationen. Es umfasst mindestens eine Lichtquelle sowie mindestens eine optische Empfangseinheit, die ein Abtastgitter und eine optoelektronische Detektoranordnung aufweist, deren lichtempfindliche Flächen in Richtung des Abtastgitters orientiert sind. Die Detektoranordnung weist zwei Detektorbereiche auf, die in einer Detektionsebene spiegelsymmetrisch zu einer ersten Symmetrieachse angeordnet sind, die in der Detektionsebene durch das Zentrum der Detektoranordnung verläuft, wobei die erste Symmetrieachse orthogonal zur Längserstreckungsrichtung der Detektorbereiche orientiert ist. Die beiden Detektorbereiche besitzen jeweils die Form eines gleichschenkligen, spitzwinkligen Dreiecks, deren Dreieckspitzen mit dem Spitzenwinkel in Richtung des Zentrums der Detektoranordnung orientiert sind.
Vorzugsweise weist die Detektoranordnung zwei weitere Detektorbereiche auf, die identisch zu den beiden ersten Detektorbereichen ausgebildet und spiegelsymmetrisch zu einer zweiten Symmetrieachse angeordnet sind, die in der Detektionsebene durch das Zentrum der Detektoranordnung verläuft und orthogonal zur ersten Symmetrieachse orientiert ist.
Es ist dabei möglich,

- dass die Dreiecke jeweils einen Spitzenwinkel $\gamma$ besitzen, für den $\gamma/2 = 7{,}125°$ +/- 5° gilt, und
- dass sich die Dreieckspitzen mit dem Spitzenwinkel im Zentrum der Detektoranordnung berühren.

In einer möglichen Ausführungsform kann in jedem Detektorbereich eine Mehrzahl einzelner Detektorelemente periodisch und parallel zueinander entlang einer Anordnungsrichtung angeordnet sein, die senkrecht zur Längserstreckungsrichtung der Detektorbereiche orientiert ist.
Mit Vorteil ist hierbei vorgesehen,

- dass die Detektorelemente jeweils rechteckförmig ausgebildet und die Rechtecks-Längsachsen parallel zur Längserstreckungsrichtung des Detektorbereichs orientiert sind, und
- dass jedes vierte Detektorelement entlang der Anordnungsrichtung miteinander elektrisch verschaltet ist, so dass aus der Abtastung eines auf die Detektoranordnung fallenden Streifenmusters vier phasenverschobene Ausgangssignale zur Weiterverarbeitung resultieren.

Vorzugsweise beträgt dabei das Verhältnis aus Detektorelement-Breite und Detektorelement-Periodizität 1:7.
Mit Vorteil kann weiterhin vorgesehen sein, dass für die Änderung der Detektorelement-Länge entlang der Anordnungsrichtung

$$dh\_D / dx = +/- 8$$

gilt, mit

     h_D := Detektorelement-Länge,
     x := Anordnungsrichtung.

Es ist darüber hinaus möglich, dass das Abtastgitter in einer Ebene parallel zur Detektionsebene angeordnet ist und aus einer periodischen Anordnung von Gitterbereichen entlang mindestens einer Gitterrichtung besteht, wobei die Gitterrichtung einen Winkel von 45° gegenüber der Längserstreckungsrichtung der Detektorbereiche einnimmt.

Mit Vorteil ist vorgesehen, dass das Abtastgitter als transmittives, kombiniertes Amplituden-Phasengitter ausgebildet ist, wobei

- in jedem Gitterbereich eine identisch ausgebildete, opake Amplitudengitterstruktur angeordnet ist, und
- entlang jeder Gitterrichtung in jedem zweiten Gitterbereich über der Amplitudengitterstruktur eine Phasenschiebeschicht angeordnet ist.

Dabei ist möglich, dass die Phasenschiebeschicht in Bezug auf das Material und die Schichtdicke derart ausgebildet ist, dass darüber eine weitgehende Unterdrückung der 0. Beugungsordnung sowie aller geraden Beugungsordnungen für einen bestimmten Wellenlängenbereich und für einen bestimmten Einfallswinkelbereich resultiert.

Ferner kann die die Amplitudengitterstruktur derart ausgebildet sein, dass für einen bestimmten Wellenlängenbereich eine bevorzugte Transmission in die +/- 1. Beugungsordnungen und eine weitgehende Unterdrückung von ungeraden Beugungsordnungen resultiert.

In einer möglichen Ausführungsform kann vorgesehen sein, dass das Abtastgitter auf derjenigen Seite einer transparenten Deckplatte der Empfangseinheit angeordnet ist, die in Richtung der Detektoranordnung orientiert ist.

Vorzugsweise weist das kombinierte Amplituden-Phasengitter eine Schachbrettstruktur mit einer periodischen Anordnung von quadratischen Gitterbereichen entlang zweier orthogonaler Gitterrichtungen auf.

Mit Vorteil kann weiterhin vorgesehen sein,

- dass die Amplitudengitterstruktur aus opaken Gitterstegen besteht, die parallel zueinander entlang der beiden Gitterrichtungen angeordnet sind und zumindest teilweise unterschiedliche Stegbreiten aufweisen, und,
- dass die Amplitudengitterstrukturen in Gitterbereichen, die entlang einer Gitterrichtung benachbart angeordnet sind, jeweils spiegelsymmetrisch zu einer Symmetrieachse ausgebildet sind, die entlang der Grenze der benachbarten Gitterbereiche verläuft.

Ferner ist möglich, dass die Lichtquelle als LED ausgebildet ist, die Strahlung im Wellenlängenbereich $\lambda$ = 850nm +/- 20nm emittiert und eine Kohärenzlänge kleiner gleich 7$\mu$m besitzt.

Über die erfindungsgemäßen Maßnahmen ist nunmehr gewährleistet, dass signalverfälschende Einflüsse wie z.B. unerwünschte Subharmonische, Oberwellen und 2D-Raumfrequenzen unterdrückt bzw. ausgefiltert werden. Weiterhin ist sichergestellt, dass eine hinreichende Signalstärke der erfassten Messsignale in einem großen Abstandsbereich zwischen Lichtquelle und Empfangseinheit für alle erfassten Empfangswinkel resultiert. Auf diese Art und Weise ist eine deutliche Steigerung der Genauigkeit der Positionsmessung im Raum möglich.

Weitere Einzelheiten und Vorteile der vorliegenden Erfindung seien anhand der nachfolgenden Beschreibung eines Ausführungsbeispiels der erfindungsgemäßen Vorrichtung in Verbindung mit den Figuren erläutert.

## KURZE BESCHREIBUNG DER ZEICHNUNGEN

Es zeigt

Figur 1 eine stark schematisierte Prinzipdarstellung zur Erläuterung des Messprinzips des erfindungsgemäßen optischen Positionsmesssystems;

Figur 2a eine Draufsicht auf ein Ausführungsbeispiel der Detektoranordnung des erfindungsgemäßen optischen Positionsmesssystems;

Figur 2b eine vergrößerte Detaildarstellung eines Detektorbereichs der Detektoranordnung aus Figur 2a;

Figur 3 eine Draufsicht auf ein Ausführungsbeispiel des Abtastgitters des erfindungsgemäßen optischen Positionsmesssystems;

Figur 4a eine Draufsicht auf einen Teil des Abtastgitters aus Figur 3;

Figur 4b eine vergrößerte Detaildarstellung des Abtastgitters aus Figur 4a in Verbindung mit einer Schnittansicht desselbigen;

Figur 5 eine Nebeneinander-Darstellung der Detektoranordnung und des Abtastgitters aus den Figuren 2a und 3.

## BESCHREIBUNG DER AUSFÜHRUNGSFORMEN

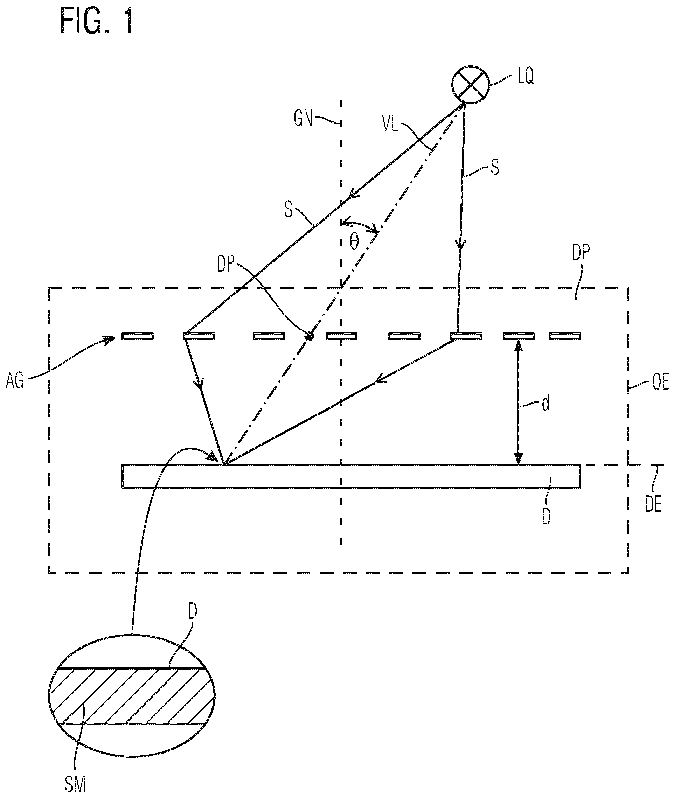

Anhand der stark schematisierten Darstellung in Figur 1 sei nachfolgend das zugrundeliegende Messprinzip des erfindungsgemäßen optischen Positionsmesssystems und dessen grundsätzlicher Aufbau erläutert.

Das entsprechende optische Positionsmesssystem umfasst mindestens eine Lichtquelle LQ sowie mindestens eine optische Empfangseinheit OE. Die Lichtquelle LQ kann dabei z.B. an einem im Raum beweglichen Messobjekt angeordnet sein, dessen räumliche Position und Orientierung (Pose) mit Hilfe der stationär angeordneten optischen Empfangseinheit OE zu bestimmen ist.

Die Lichtquelle LQ ist vorzugsweise als angenäherte Punktlichtquelle ausgebildet, z.B. als LED. In einer vorteilhaften Ausführungsform besitzt die Lichtquelle LQ eine lediglich geringe Kohärenzlänge, die kleiner gleich 7 μm gewählt wird; sie emittiert Strahlung im Wellenlängenbereich $\lambda$ = 850nm +/-20nm. Die Lichtquelle LQ sendet hierbei divergente Strahlenbündel S in Richtung der optischen Empfangseinheit OE, d.h. der Lichtquelle LQ ist keine Kollimationsoptik vorgeordnet.

Die optische Empfangseinheit OE umfasst im Wesentlichen ein eintrittsseitig angeordnetes Abtastgitter AG sowie eine dem Abtastgitter AG in Strahlausbreitungsrichtung ortsfest nachgeordnete, optoelektronische Detektoranordnung D. Das Abtastgitter AG ist auf derjenigen Seite einer transparenten Deckplatte DP der Empfangseinheit OE angeordnet, die in Richtung der Detektoranordnung D orientiert ist. Sämtliche Komponenten der Empfangseinheit OE sind in einem geeigneten Gehäuse angeordnet, das in Figur 1 nicht näher dargestellt ist. Die lichtempfindlichen Flächen der Detektoranordnung D sind in Richtung des Abtastgitters AG orientiert und definieren eine Detektionsebene DE in der optischen Empfangseinheit OE. Die Detektionsebene DE ist wie aus Figur 1 ersichtlich, parallel und in einem bestimmten Abstand d vom Abtastgitter AG entfernt in der Empfangseinheit OE angeordnet. In Bezug auf eine geeignete Ausbildung der optischen Empfangseinheit OE sei an dieser Stelle ergänzend auf die EP 4 145 083 A1 verwiesen.

Aus der Wechselwirkung der von der Lichtquelle LQ divergent emittierten Lichtbündel S mit dem Abtastgitter AG resultiert in der Detektionsebene DE der Detektoranordnung D über eine Gitter-Selbstabbildung ein räumlich strukturiertes Lichtfeld in Form eines Streifenmusters SM, das im unteren Bereich von Figur 1 in einer Teil-Draufsicht auf die Detektionsebene DE der Detektoranordnung D schematisch angedeutet ist. Im Fall einer Relativbewegung der Lichtquelle LQ gegenüber der optischen Empfangseinheit OE wandert das Streifenmuster SM in der Detektionsebene DE über die Detektoranordnung D. Über die Erfassung der Streifenmuster-Position bzw. -Positionsänderung mit Hilfe der Detektoranordnung D lässt sich dann der Durchstoßpunkt DP der Verbindungslinie VL zwischen der Lichtquelle LQ und der Detektoranordnung D durch das Abtastgitter AG bestimmen. Aus der Lage des Durchstoßpunkts DP durch das Abtastgitter AG ergibt sich in Kombination mit dem bekannten Abstand d zwischen Abtastgitter AG und Detektoranordnung D der Licht-Einfallswinkel θ relativ zur Gitternormalen GN.

In Figur 1 sind lediglich die Verhältnisse in Bezug auf die Zeichenebene dargestellt, d.h. die Zeichenebene stellt die Messebene in Bezug auf den Licht-Einfallswinkel θ dar. In der Praxis ist vorteilhaft, wenn ergänzend hierzu - wie eingangs erwähnt - noch eine zweite Winkelmessung entlang einer weiteren Messebene erfolgt, die senkrecht zur Zeichenebene orientiert ist. Von daher wird in einer derartigen Ausführungsform der erfindungsgemäßen Vorrichtung letztlich eine 2D-Winkelmessung zwischen der Lichtquelle LQ und der optischen Empfangseinheit OE vorgenommen. Bei den beiden Winkelmessungen handelt es sich jeweils um inkrementale Messungen, d.h. im Fall der Bewegung der Lichtquelle LQ von einer ersten Position in eine zweite Position werden mit Hilfe des erfindungsgemäßen optischen Positionsmesssystems die dabei resultierenden Winkeländerungen in den beiden Messebenen erfasst. In einer typischen Konfiguration entspricht eine Signalperiode der über die Detektoranordnung D erzeugten, positionsabhängigen Inkrementalsignale einer Winkeländerung von wenigen mrad.

Um eine möglichst genaue Messung der Streifenmuster-Position sicherzustellen und eventuelle Signaleinbrüche bei variierenden Abständen von Lichtquelle LQ und Empfangseinheit OE zu vermeiden, erweisen sich eine Reihe von Maßnahmen im erfindungsgemäßen optischen Positionsmesssystem als vorteilhaft, insbesondere auf Seiten der Detektoranordnung D und des Abtastgitters AG in der optischen Empfangseinheit OE. Diese Maßnahmen sind primär deshalb erforderlich, da die für die Messung mittels Gitter-Selbstabbildung idealerweise erforderlichen Sinus-Gitter als Abtastgitter fertigungstechnisch-bedingt nicht verfügbar sind; stattdessen müssen Binärgitter verwendet werden. Als ideale Sinus-Gitter seien dabei Gitter verstanden, deren Transmission ortsabhängig $\sin^2$-förmig variiert. Im Fall der Verwendung derartiger Sinus-Gitter würden lediglich die in Transmission resultierenden +/- 1. Beugungsordnungen zur Gitter-Selbstabbildung in der Detektionsebene beitragen. Um trotz des Einsatzes von Binärgittern hinreichend genaue Winkelmessungen sicherzustellen, sind die nachfolgend zu erläuternden Maßnahmen vorteilhaft, um die durch Binärgitter verursachten, unerwünschten Effekte zumindest so weit wie möglich minimieren. Im Folgenden werden Varianten von Detektoranordnungen D bzw. Abtastgittern AG im Detail erläutert, die durch geeignete Maßnahmen für den Einsatz im erfindungsgemäßen optischen Positionsmesssystem optimiert wurden.

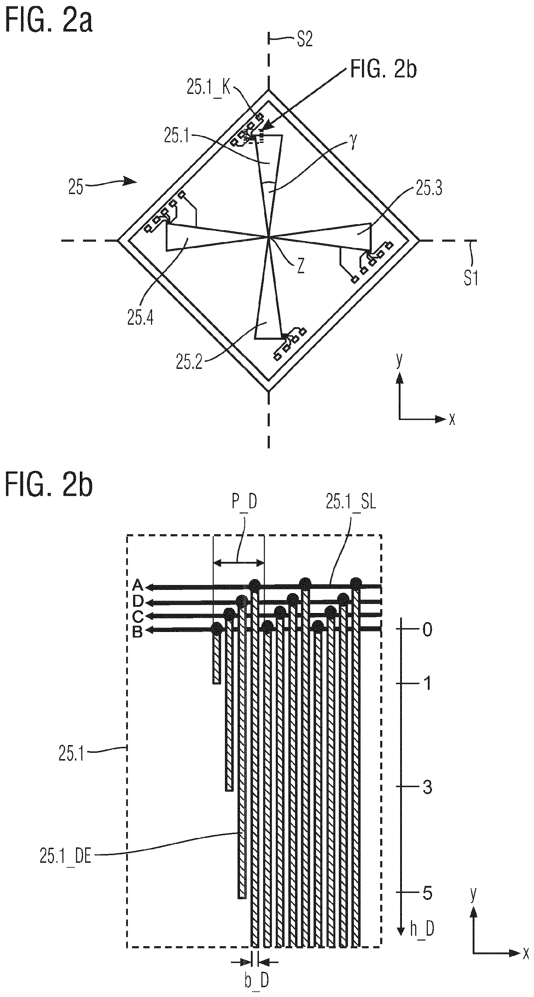

Anhand der Figuren 2a, 2b sei zunächst eine Ausführungsform einer vorteilhaften Detektoranordnung 25 für eine 2D-Winkelmessung beschrieben.

In Figur 2a ist eine Draufsicht auf eine entsprechende Detektoranordnung 25 des erfindungsgemäßen optischen Positionsmesssystems gezeigt. Im vorliegenden Beispiel weist die Detektoranordnung 25 vier Detektorbereiche 25.1 - 25.4 auf, die jeweils die Form eines gleichschenkligen, spitzwinkligen Dreiecks besitzen. Die Dreiecksspitzen mit dem jeweils identischen Spitzenwinkel γ sind alle in Richtung des Zentrums Z der Detektoranordnung 25 orientiert. Das Zentrum Z stellt hierbei den geometrischen Schwerpunkt der Detektoranordnungs-Fläche dar. Die Anordnung der Detektorbereiche 25.1 - 25.4 ist derart vorgesehen, dass jeweils zwei Detektorbereiche 25.1, 25.2 bzw. 25.3, 25.4 spiegelsymmetrisch zu einer der beiden Symmetrieachsen S1, S2 der Detektoranordnung 25 angeordnet sind. Die Symmetrieachsen S1, S2 verlaufen in der Detektionsebene durch das Zentrum Z der Detektoranordnung 25 und sind orthogonal zueinander orientiert. Konkret sind im dargestellten Beispiel die beiden Detektorbereiche 25.1, 25.2 spiegelsymmetrisch zur ersten Symmetrieachse S1 angeordnet, während die beiden Detektorbereiche 25.3, 25.4 spiegelsymmetrisch zur zweiten Symmetrieachse S2 angeordnet sind. Die spiegelsymmetrisch zu einer der beiden Symmetrieachsen S1 bzw. S2 angeordneten Detektorbereiche 25.1, 25.2 bzw. 25.3, 25.4 weisen jeweils eine gemeinsame Längserstreckungsrichtung y bzw. x auf. So erstrecken sich gemäß Figur 2a die beiden Detektorbereiche 25.1, 25.2 entlang der angegebenen y-Richtung und die Detektorbereiche 25.3, 25.4 entlang der x-Richtung. Die Längserstreckungsrichtung y der beiden Detektorbereiche 25.1, 25.2 ist damit orthogonal zur ersten Symmetrieachse S1 orientiert, die Längserstreckungsrichtung x der beiden Detektorbereiche 25.3, 25.4 orthogonal zur zweiten Symmetrieachse S2.

Die beiden Detektorbereiche 25.1, 25.2, deren Längserstreckungsrichtung jeweils entlang der angegebenen y-Richtung orientiert ist, dienen zur Erfassung einer Streifenmusterbewegung entlang der Messrichtung x; über die beiden anderen Detektorbereiche 25.3, 25.4, deren Längserstreckungsrichtung jeweils entlang der x-Richtung orientiert ist, kann eine Streifenmusterbewegung entlang der Messrichtung y erfasst werden.

In der dargestellten Ausführungsform der Detektoranordnung 25 ist vorgesehen, dass sich die Dreiecksspitzen der Detektorbereiche 25.1 - 25.4 mit dem Spitzenwinkel γ im Zentrum Z der Detektoranordnung 25 berühren.

Der Spitzenwinkel γ wird im vorliegenden Beispiel bzw. für die vorliegende Anwendung mit einem Messvolumen von etwa 1m$^3$ und einem Einfallswinkelbereich von ca. +/- 50° dabei jeweils so gewählt, dass γ/2 = 7,125° +/- 5° gilt. Grundsätzlich kann bei geänderten Anforderungen an den Messbereich auch ein hiervon abweichender Bereich für den Spitzenwinkel γ vorgesehen sein, für den γ/2 = 7,125° + [- 5°, +20°] gelten kann.

Die Länge eines Detektorbereichs 25.1 - 25.4 entlang seiner Längserstreckungsrichtung x oder y beträgt jeweils 5.376mm; die Basislänge der Dreieck-Einhüllenden beträgt jeweils 1.344mm.

Eine vergrößerte Detaildarstellung des Detektorbereichs 25.1 ist in Figur 2b gezeigt. Wie aus der Figur erkennbar, sind in diesem Detektorbereich 25.1 eine Mehrzahl einzelner, rechteckförmiger Detektorelemente 25.1_DE periodisch und parallel zueinander angeordnet. Die periodische Anordnung erfolgt im Detektorbereich 25.1 entlang einer Anordnungsrichtung x, die senkrecht zur Längserstreckungsrichtung y des Detektorbereichs 25.1 orientiert ist; die Anordnungsrichtung x ist demzufolge parallel zur Messrichtung x dieses Detektorbereichs 25.1 orientiert. Die Rechtecks-Längsachsen der Detektorelemente 25.1_DE sind wie ersichtlich parallel zur Längserstreckungsrichtung y des Detektorbereichs 25.1 orientiert. Als geeignete Detektorelemente 25.1_DE kommen z.B. optoelektronische Detektorelemente in Form von Fotodioden in Betracht.

Wie ferner aus Figur 2b ersichtlich, ist im Detektorbereich 25.1 entlang der Anordnungsrichtung x jedes vierte Detektorelement 25.1_DE miteinander elektrisch verschaltet. Dies erfolgt über vier Sammelleitungen 25.1_SL, die jeweils jedes vierte Detektorelement 25.1_DE elektrisch miteinander verbinden. Auf diese Art und Weise werden aus der Abtastung des Streifenmusters in der Detektionsebene vier, um 90° phasenverschobene, periodische Ausgangssignale A, B, C, D erzeugt und zur Weiterverarbeitung bereitgestellt. Mit den vier Sammelleitungen 25.1_SL des Detektorbereichs 25.1 sind in der Detektoranordnung 25 vier Kontaktanschlüsse 25.1_K außerhalb dieses Detektorbereichs 25.1 verbunden, wie dies aus Figur 2a ersichtlich ist.

Im Rahmen der Signal-Weiterverarbeitung werden in bekannter Art und Weise das 0°-Ausgangssignal A und das 180°-Ausgangssignal C über eine Gegentakt-Verschaltung zu einem ersten Inkrementalsignal S0 kombiniert; das 90°-Ausgangssignal B sowie das 270°-Ausgangssignal D werden ebenfalls über eine Gegentakt-Verschaltung zu einem zweiten Inkrementalsignal S90 kombiniert, das gegenüber dem ersten Inkrementalsignal S0 um 90° phasenversetzt ist.

In vorliegenden Ausführungsbeispiel wird die Breite b eines Detektorelements 25.1_DE gemäß b_D = 12μm gewählt, die Lücken zwischen den Detektorelementen 25.1_DE besitzen eine Breite von 9μm. Die Detektorelement-Periodizität P in Bezug auf phasengleiche Detektorelemente P beträgt dann P_D = 84μm, d.h. für das Verhältnis aus Detektorelement-Breite b_D und Detektorelement-Periodizität P_D gilt b_D:P_D = 1:7. Im Detektorbereich 25.1 sind insgesamt 64 Detektorelemente 25.1_DE vorgesehen, woraus eine maximale Breite des Detektorbereichs 25.1 bzw. eine Basislänge der Dreieck-Einhüllenden von 1.344mm resultiert.

Figur 2b zeigt im Detail die Anordnung der Detektorelemente 25.1_DE im linken Basiswinkelbereich des Detektorbereichs 25.1. Demnach ist am linken Rand des Detektorbereichs 25.1 dasjenige Detektorelement angeordnet, das das Ausgangssignal B liefert, es weist den Abstand 1/8 · P_D vom linken oberen Eckpunkt des dreieckförmigen Detektorbereichs 25.1 auf. Im Abstand 1/4 · P_D folgen jeweils die Detektorelemente 25.1_DE, die die Ausgangssignale C, D, A liefern usw..

Wie weiterhin aus Figur 2b ersichtlich, weisen aufgrund der oben beschriebenen dreieckförmigen Form des Detektorbereichs 25.1 die Detektorelemente 25.1_DE entlang der Anordnungsrichtung x eine unterschiedliche Detektorelement-Länge h_D auf; im dargestellten Ausschnitt vergrößert sich etwa die Detektorelement-Länge h_D von links nach rechts bis zur Mitte des Detektorbereichs 25.1; ab der Mitte des Detektorbereichs 25.1 nimmt die Länge der Detektorelemente 25.1_DE nach rechts hin dann wieder ab. So besitzt das von links aus erste Detektorelement 25.1_DE, das das Ausgangssignal B liefert, eine Detektorelement-Länge h_D = 1 · P_D; das zweite Detektorelement (Ausgangssignal C) besitzt die Detektorelement-Länge h_D = 3 · P_D; das dritte Detektorelement (Ausgangssignal D) besitzt die Detektorelement-Länge h_D = 5 · P_D etc..

In einer vorteilhaften Ausführungsform gilt für die Änderung der Detektorelement-Länge h_D entlang der Anordnungsrichtung x dabei

$$dh\_D / dx = +/- 8,$$

mit

h_D := Detektorelement-Länge,
x := Anordnungsrichtung.

Innerhalb des Detektorbereichs 25.1 sind die Detektorelemente 25.1_DE dabei spiegelsymmetrisch zu einer Längs-Symmetrieachse des Detektorbereichs 25.1 angeordnet, die entlang der y-Richtung durch die Dreiecksspitze verläuft. Beidseitig benachbart zur Längs-Symmetrieachse sind hierbei die beiden Detektorelemente 25.1_DE angeordnet, die die Ausgangssignale A, B liefern. Links von der Symmetrieachse ist das Detektorelement platziert, welches das Ausgangssignal A liefert; rechts von der Symmetrieachse das Detektorelement mit dem Ausgangssignal B. Der jeweilige Abstand zur Längs-Symmetrieachse beträgt +/- 1/8 · P_D. Auf der linken Seite folgt dann im Abstand 1/4 · P_D das Detektorelement mit dem Ausgangssignal D, auf der rechten Seite im Abstand 1/4 · P_D das Detektorelement mit dem Ausgangssignal C usw...

Identisch hierzu in Bezug auf die Anordnung von Detektorelementen ist der Detektorbereich 25.2 ausgebildet, wobei sich Detektorelemente in den beiden Detektorbereichen 25.1, 25.2, die phasengleiche Ausgangssignale A, B, C, D liefern, spiegelsymmetrisch zur ersten Symmetrieachse S1 gegenüberliegen.

Um 90° verdreht demgegenüber ist die Anordnung von Detektorelementen in den beiden Detektorbereichen 25.3, 25.4 vorgesehen. Innerhalb jedes Detektorbereichs 25.1 - 25.4 ist die Ausbildung und Verschaltung der Detektorelemente jeweils grundsätzlich identisch.

Neben der noch zu beschreibenden Ausbildung des Abtastgitters trägt eine derartige Ausbildung der Detektoranordnung 25 und insbesondere die Anordnung und Verschaltung der Detektorelemente 25.1_DE in den verschiedenen Detektorbereichen 25.1 - 25.4 dazu bei, dass unerwünschte Intensitätsanteile der Gitter-Selbstabbildung unterdrückt bzw. ausgefiltert werden, die ansonsten Fehler bei der Bestimmung der 2D-Winkelpositionen der Lichtquelle verursachen würden. Derartige unerwünschte Signalanteile sind z.B. Oberwellen oder 2D-Raumfrequenzen, die sich über die Filterwirkung der Detektoranordnung 25 beseitigen lassen. Weiterhin gewährleistet die entsprechende Ausbildung der Detektorbereiche 25.1 - 25.4, dass eine zuverlässige 2D-Winkelmessung in einem großen Abstandsbereich zwischen Lichtquelle und Empfangseinheit möglich ist; im vorliegenden Ausführungsbeispiel sind Abstände zwischen Lichtquelle und Empfangseinheit im Bereich zwischen 0.2m und 1.5m möglich. Messbar sind in diesem Bereich Einfallswinkel der Strahlenbündel von der Lichtquelle in einem Einfallswinkelbereich von +/- 50° in Bezug auf eine Normale auf das Abtastgitter.

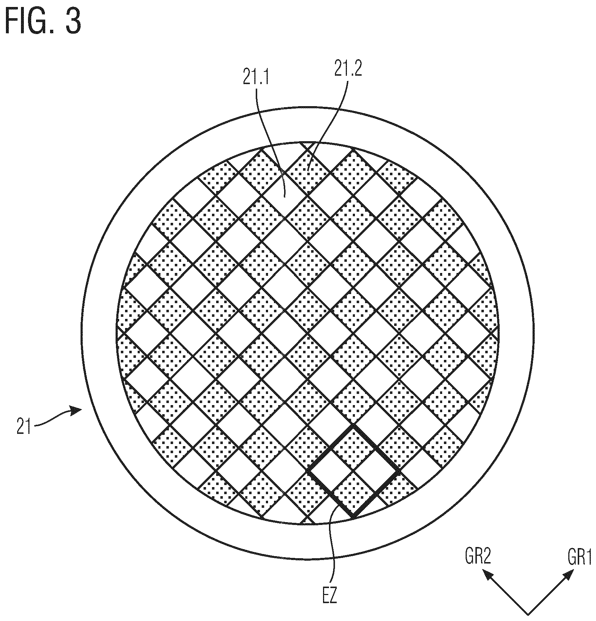

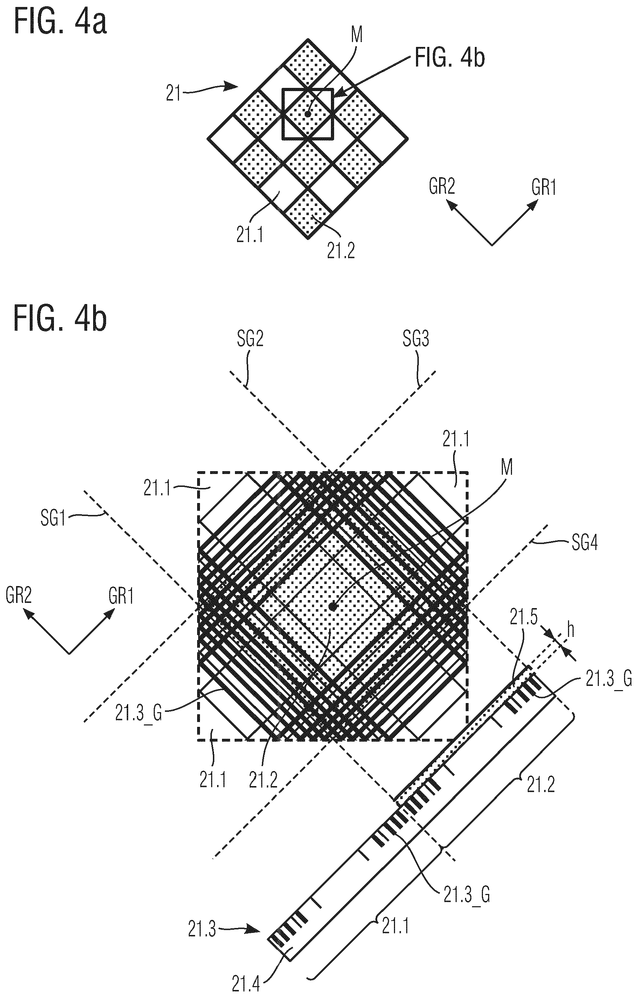

Weitere Maßnahmen, die ebenfalls auf eine Unterdrückung von Störeinflüssen in der erfindungsgemäßen Vorrichtung abzielen, werden anhand der nachfolgenden Erläuterung eines Ausführungsbeispiels des Abtastgitters in der optischen Empfangseinheit beschrieben. Figur 3 zeigt dabei eine schematisierte Draufsicht auf das kreisförmige Abtastgitter 21, die Figuren 4a, 4b Detaildarstellungen von Teilen des Abtastgitters 21 inclusive einer Schnittansicht desselbigen. Der in Figur 4b dargestellte Teil des Abtastgitters 21 sei im Folgenden auch als optische Einheitszelle des verwendeten Abtastgitters 21 bezeichnet.

Das vorliegende Abtastgitter 21 ist wie die vorstehend erläuterte Detektoranordnung 25 für eine 2D-Winkelmessung ausgelegt. Es ist als transmittives, kombiniertes Amplituden-Phasengitter ausgebildet, das aus einer periodischen Anordnung von quadratischen Gitterbereichen 21.1, 21.2 entlang zweier orthogonaler Gitterrichtungen GR1, GR2 besteht, wobei die Gitterbereiche 21.1, 21.2 unterschiedlich ausgebildet sind und unterschiedliche optische Wirkungen auf die darauf einfallenden Strahlenbündel aufweisen. Als kombiniertes Amplituden-Phasengitter sei hierbei ein Gitter verstanden, das sowohl Amplitudengitter-Bestandteile als auch Phasengitter-Bestandteile aufweist; in Bezug auf die genaue Ausbildung des Abtastgitters 21 sei auf die weitere Beschreibung der nachfolgenden Figuren verwiesen.

In Figur 3 ist mit EZ eine Elementarzelle des Abtastgitters 21 mit insgesamt vier Gitterbereichen 21.1, 21.2 bezeichnet, aus denen das Abtastgitter 21 durch Translation entlang der beiden Gitterrichtungen GR1, GR2 aufgebaut werden kann. Im dargestellten Ausführungsbeispiel werden die Periodizitäten P_GR1, P_GR2 entlang der beiden Gitterrichtungen GR1, GR2 identisch gemäß P_GR1 = P_GR2 = 222.85μm gewählt.

Die in Figur 4b dargestellte optische Einheitszelle des Abtastgitters 21 besitzt eine Periodizität von 157,58μm; diese bestimmt die Signalperiode der über die Detektoranordnung D erzeugten, positionsabhängigen Inkrementalsignale bezüglich resultierender Winkeländerungen.

In jedem Gitterbereich 21.1, 21.2 des Abtastgitters 21 ist eine identisch ausgebildete, opake Amplitudengitterstruktur 21.3 auf einem Trägersubstrat 21.4 angeordnet, wie dies z.B. aus Figur 4b ersichtlich ist. Die Amplitudengitterstruktur besteht hierbei jeweils aus opaken Gitterstegen 21.3_G, die parallel zueinander entlang der beiden Gitterrichtungen GR1, GR2 angeordnet sind und zumindest teilweise unterschiedliche Stegbreiten aufweisen.

In jedem Gitterbereich 21.1, 21.2 ist die Amplitudengitterstruktur identisch und symmetrisch in Bezug auf den Mittelpunkt M des jeweiligen Gitterbereichs ausgebildet. Weiterhin sind in entlang einer Gitterrichtung GR1, GR2 benachbart angeordneten Gitterbereichen 21.1, 21.2 die Amplitudengitterstrukturen dabei jeweils spiegelsymmetrisch zu einer Symmetrieachse SG1, SG2, SG3, SG4 ausgebildet, die entlang der Grenze der benachbarten Gitterbereiche 21.1, 21.2 verläuft. So ist aus Figur 4b ersichtlich, wie z.B. die Breiten der opaken Gitterstege im zentralen Gitterbereich 21.2 und dem benachbarten Gitterbereich 21.1 links unten eine Spiegelsymmetrie in Bezug auf die Symmetrieachse SG1 aufweisen; analog hierzu sind die Stegbreiten in den anderen angrenzenden drei anderen Gitterbereichen 21.1 in Bezug auf die Symmetrieachsen SG2, SG3 und SG 4 ausgebildet. Deutlich ersichtlich ist dies in Bezug auf die Symmetrieachse SG1 auch in der Querschnittsansicht des Abtastgitters rechts unten in Figur 4b; wie daraus klar ersichtlich, ist die Amplitudengitterstruktur in allen Gitterbereichen 21.1, 21.2 identisch ausgebildet.

Eine auf diese Art und Weise ausgebildete Amplitudengitterstruktur 21.3 gewährleistet, dass das Abtastgitter 21 dem idealen Sinusgitter relativ ähnlich ist und für einen bestimmten Wellenlängenbereich eine bevorzugte Transmission in die +/- 1. Beugungsordnungen resultiert; höhere ungeradzahlige Beugungsordnungen, die sich ggf. negativ auf die Qualität der erzeugten Signale auswirken, werden darüber weitgehend unterdrückt.

In jedem zweiten Gitterbereich 21.2 entlang der beiden Gitterrichtungen GR1, GR2 ist über der Amplitudengitterstruktur 21.3 ganzflächig eine Phasenschiebeschicht 21.5 angeordnet, wie dies aus der Schnittansicht in Figur 4b ersichtlich ist. Die Periodizität der Phasenschiebeschicht 21.5 entspricht damit den Periodizitäten P_GR1 bzw. P_GR2, mit der die beiden Gitterbereiche 21.1, 21.2 entlang der beiden Gitterrichtungen GR1, GR2 angeordnet sind.

Als geeignetes Material für die Phasenschiebeschicht 21.5 kann z.B. Tantalpentoxid Ta2O5 mit einem Brechungsindex n = 2.122 im Abtastgitter 21 verwendet werden. Bei einer gewählten Höhe h = 351 nm kann mit diesem Material bei einfallender Strahlung im Wellenlängenbereich 850nm +/- 20nm und einem Einfallswinkelbereich zwischen 0° und 50° sichergestellt werden, dass sowohl die 0. Beugungsordnung als auch alle geraden Beugungsordnungen unterdrückt werden. Für einen mittleren Einfallswinkel von ca. 30° hat die Phasenschiebeschicht 21.5 dann einen Phasenhub von 180°. Über eine derartige Ausbildung der Gitterbereiche 21.2 können somit weitere Beugungsordnungen eliminiert werden, die sich ebenfalls negativ auf die Signalqualität auswirken; i.w. tragen in der erfindungsgemäßen Vorrichtung somit nur die +/- 1. Beugungsordnungen zur Signalerzeugung bei.

Aus der Schnittansicht in Figur 4b ist der Aufbau des Abtastgitters 21 im Detail ersichtlich. Auf der Oberseite des Trägersubstrats 21.4 sind in den beiden Gitterbereichen 21.1, 21.2 die vorstehend erläuterte Amplitudengitterstruktur 21.3 mit den opaken Gitterstegen 21.3_G bzw. in den Gitterbereichen 21.2 die Phasenschiebeschicht 21.5 angeordnet. Auf der gegenüberliegenden Seite des Trägersubstrats 21.4, also auf dessen Unterseite, befindet sich noch zusätzlich eine ganzflächige Antireflexions-Schicht 21.6.

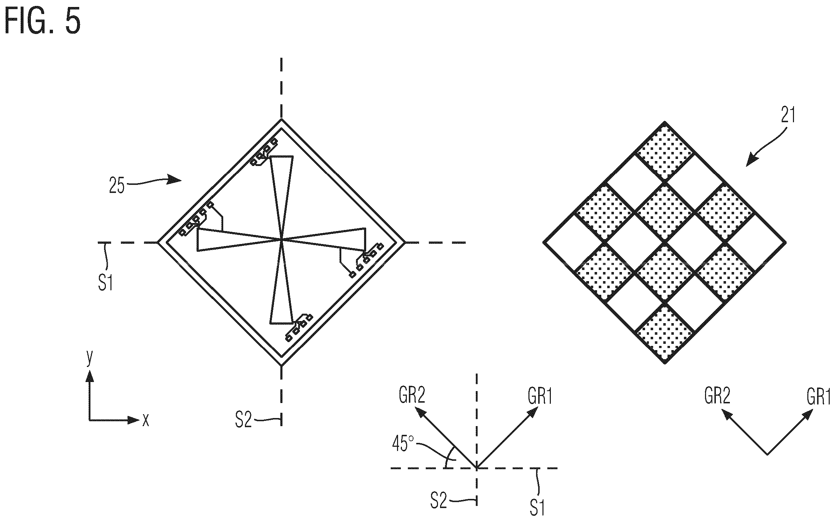

Anhand der Darstellung in Figur 5 sei abschließend erläutert, wie die vorstehend erläuterte Detektoranordnung 25 und das Abtastgitter 21 in der optischen Empfangseinheit des erfindungsgemäßen Positionsmesssystems vorzugsweise relativ zueinander angeordnet werden; die entsprechende Relativanordnung stellt dabei eine weitere Maßnahme zur Filterung unerwünschter Einflüsse auf die erzeugten Signale insbesondere im Fall der 2D-Winkelmessung dar. Hierzu zeigt Figur 5 nebeneinander angeordnete Draufsichten auf die Detektoranordnung 25 und das Abtastgitter 21. Wie anhand von Figur 1 erläutert, ist im realen System das Abtastgitter 21 mit der periodischen Anordnung von Gitterbereichen 21.1, 21.2 entlang der beiden Gitterrichtungen GR1, GR2 in einer Ebene parallel zur Detektionsebene und beabstandet im Abstand d im Gehäuse der Empfangseinheit angeordnet .

Gemäß der Darstellung in Figur 5 erfolgt die Anordnung des Abtastgitters dabei so, dass im vorliegenden Fall die beiden Gitterrichtungen GR1, GR2 jeweils einen Winkel von 45° gegenüber den Längserstreckungsrichtungen x, y der Detektorbereiche 21.1 - 21.4 einnehmen. Über ein derartige Relativanordnung von Abtastgitter 21 und Detektoranordnung 25 kann vermieden werden, dass es bei bestimmten Einfallswinkeln der Lichtquellen-Strahlenbündel auf das Abtastgitter unter Umständen zu einem vollständigen Signalverlust kommt. D.h., über diese Maßnahme ist sichergestellt, dass im gesamten Messbereich eine zuverlässige 2D-Winkelmessung möglich ist.

Neben dem erläuterten Ausführungsbeispiel der erfindungsgemäßen Vorrichtung gibt es im Rahmen der vorliegenden Erfindung selbstverständlich noch weitere Ausgestaltungsmöglichkeiten.

Während das vorstehend beschriebene Beispiel eine 2D-Winkelmessung im Raum ermöglicht, ist auch eine Ausbildung des erfindungsgemäßen optischen Positionsmesssystems möglich, bei dem lediglich eine 1D-Winkelmessung zwischen Lichtquelle und optischer Empfangseinheit in einer Messebene erfolgt.

Auf Seiten der Detektoranordnung wären in diesem Fall lediglich zwei der vier Detektorbereiche 25.1 - 25.4 aus Figur 2a zu verwenden, nämlich zwei gegenüberliegende Detektorbereiche wie etwa die sich entlang der y-Richtung erstreckenden Detektorbereiche 25.1, 25.2.

Das Abtastgitter würde bei einer derartigen Variante dann aus einer periodischen Anordnung von Gitterbereichen entlang lediglich einer Gitterrichtung bestehen, wobei die Gitterbereiche wiederum als kombiniertes Amplituden-Phasengitter ausgebildet sind. Jeder Gitterbereich weist auch dabei eine Amplitudengitterstruktur auf, in jedem zweiten Gitterbereich ist über der Amplitudengitterstruktur eine Phasenschiebeschicht angeordnet. Die Amplitudengitterstruktur wäre in diesem Fall keine zweidimensionale Struktur wie vorstehend erläutert, sondern eine entlang der Gitterrichtung vorgesehene eindimensionale Anordnung opaker Gitterstege mit teilweise unterschiedlichen Stegbreiten. In diesem Fall entspricht die Gitterrichtung der Anordnungsrichtung der Detektorelemente in den beiden Detektorbereichen 25.1, 25.2, d.h. der Richtung x in Figur 2a; damit sind die Gitterstege parallel zu den Detektorelementen ausgerichtet. Die Anordnung der Gitterstege erfolgt wiederum dergestalt, dass wie im obigen Beispiel unerwünschte ungeradzahlige Beugungsordnungen unterdrückt werden. Hierzu ist eine spiegelsymmetrische Anordnung der Gitterstege in Bezug auf eine Symmetrieachse vorgesehen, die durch die Grenze benachbarter Gitterbereiche verläuft.

**Patentansprüche**

1. Positionsmesssystem zur Bestimmung räumlicher Positionsinformationen mit mindestens einer Lichtquelle sowie mindestens einer optischen Empfangseinheit, die ein Abtastgitter und eine optoelektronische Detektoranordnung umfasst, deren lichtempfindliche Flächen in Richtung des Abtastgitters orientiert sind, **dadurch gekennzeichnet,**

   - **dass** die Detektoranordnung (D; 25) zwei Detektorbereiche (25.1, 25.2) aufweist, die in einer Detektionsebene (DE) spiegelsymmetrisch zu einer ersten Symmetrieachse (S1) angeordnet sind, die in der Detektionsebene (DE) durch das Zentrum (Z) der Detektoranordnung (D; 25) verläuft, wobei die erste Symmetrieachse (S1) orthogonal zur Längserstreckungsrichtung (y) der Detektorbereiche (25.1, 25.2) orientiert ist, und
   - **dass** die beiden Detektorbereiche (25.1, 25.2) jeweils die Form eines gleichschenkligen, spitzwinkligen Dreiecks besitzen, deren Dreieckspitzen mit dem Spitzenwinkel (γ), der sich zwischen den gleichschenkligen Seiten befindet, in Richtung des Zentrums (Z) der Detektoranordnung (D; 25) orientiert sind.

2. Positionsmesssystem nach Anspruch 1, **dadurch gekennzeichnet, dass** die Detektoranordnung (D; 25) zwei weitere Detektorbereiche (25.3, 25.4) aufweist, die identisch zu den beiden ersten Detektorbereichen (25.1, 25.2) ausgebildet und spiegelsymmetrisch zu einer zweiten Symmetrieachse (S2) angeordnet sind, die in der Detektionsebene (DE) durch das Zentrum (Z) der Detektoranordnung (D; 25) verläuft und orthogonal zur ersten Symmetrieachse (S1) orientiert ist.

3. Positionsmesssystem nach Anspruch 1 oder 2, **dadurch gekennzeichnet,**

   - **dass** die Dreiecke jeweils einen Spitzenwinkel γ besitzen, für den γ/2 = 7,125° +/- 5° gilt, und
   - **dass** sich die Dreieckspitzen mit dem Spitzenwinkel (γ) im Zentrum (Z) der Detektoranordnung (D; 25) berühren.

4. Positionsmesssystem nach mindestens einem der vorhergehenden Ansprüche, **dadurch gekennzeichnet, dass** in jedem Detektorbereich (25.1 - 25.4) eine Mehrzahl einzelner Detektorelemente (25.1_DE) periodisch und parallel zueinander entlang einer Anordnungsrichtung (x, y) angeordnet ist, die senkrecht zur Längserstreckungsrichtung (y, x) der Detektorbereiche (25.1 - 25.4) orientiert ist.

5. Positionsmesssystem nach Anspruch 4, **dadurch gekennzeichnet,**

   - **dass** die Detektorelemente (25.1_DE) jeweils rechteckförmig ausgebildet und die Rechtecks-Längsachsen parallel zur Längserstreckungsrichtung (y, x) des Detektorbereichs (25.1 - 25.4) orientiert sind, und
   - **dass** jedes vierte Detektorelement (25.1_DE) entlang der Anordnungsrichtung (x, y) miteinander elektrisch verschaltet ist, so dass aus der Abtastung eines auf die Detektoranordnung (D; 25) fallenden Streifenmusters (SM) vier phasenverschobene Ausgangssignale (A, B, C, D) zur Weiterverarbeitung resultieren.

6. Positionsmesssystem nach Anspruch 5, **dadurch gekennzeichnet, dass** das Verhältnis aus Detektorelement-Breite (b_D) und Detektorelement-Periodizität (P_D) 1:7 beträgt.

7. Positionsmesssystem nach Anspruch 5, **dadurch gekennzeichnet, dass** für die Änderung der Detektorelement-Länge (h_D) entlang der Anordnungsrichtung (x)

$$dh\_D / dx = +/- 8$$

gilt, mit

h_D := Detektorelement-Länge,
x := Anordnungsrichtung.

8.  Positionsmesssystem nach mindestens einem der vorhergehenden Ansprüche, **dadurch gekennzeichnet, dass** das Abtastgitter (AG; 21) in einer Ebene parallel zur Detektionsebene (DE) angeordnet ist und aus einer periodischen Anordnung von Gitterbereichen (21.1, 21.2) entlang mindestens einer Gitterrichtung (GR1, GR2) besteht, wobei die Gitterrichtung (GR1, GR2) einen Winkel von 45° gegenüber der Längserstreckungsrichtung (y, x) der Detektorbereiche (25.1 - 25.4) einnimmt.

9.  Positionsmesssystem nach mindestens einem der vorhergehenden Ansprüche, **dadurch gekennzeichnet, dass** das Abtastgitter (AG; 21) als transmittives, kombiniertes Amplituden-Phasengitter ausgebildet ist, wobei

    - in jedem Gitterbereich (21.1, 21.2) eine identisch ausgebildete, opake Amplitudengitterstruktur (21.3) angeordnet ist, und
    - entlang jeder Gitterrichtung (GR1, GR2) in jedem zweiten Gitterbereich über der Amplitudengitterstruktur (21.3) eine Phasenschiebeschicht (21.5) angeordnet ist.

10. Positionsmesssystem nach Anspruch 9, **dadurch gekennzeichnet, dass** die Phasenschiebeschicht (21.5) in Bezug auf das Material und die Schichtdicke (h) derart ausgebildet ist, dass darüber eine weitgehende Unterdrückung der 0. Beugungsordnung sowie aller geraden Beugungsordnungen für einen bestimmten Wellenlängenbereich und für einen bestimmten Einfallswinkelbereich resultiert.

11. Positionsmesssystem nach Anspruch 9 oder 10, **dadurch gekennzeichnet, dass** die Amplitudengitterstruktur (21.3) derart ausgebildet ist, dass für einen bestimmten Wellenlängenbereich eine bevorzugte Transmission in die +/- 1. Beugungsordnungen und eine weitgehende Unterdrückung von ungeraden Beugungsordnungen resultiert.

12. Positionsmesssystem nach mindestens einem der vorhergehenden Ansprüche, **dadurch gekennzeichnet, dass** das Abtastgitter (AG; 21) auf derjenigen Seite einer transparenten Deckplatte (DP) der Empfangseinheit (OE) angeordnet ist, die in Richtung der Detektoranordnung (D; 25) orientiert ist.

13. Positionsmesssystem nach mindestens einem der Ansprüche 9 - 11, **dadurch gekennzeichnet, dass** das kombinierte Amplituden-Phasengitter eine Schachbrettstruktur mit einer periodischen Anordnung von quadratischen Gitterbereichen (GR1, GR2) entlang zweier orthogonaler Gitterrichtungen (GR1, GR2) aufweist.

14. Positionsmesssystem nach Anspruch 13, **dadurch gekennzeichnet,**

    - **dass** die Amplitudengitterstruktur (21.3) aus opaken Gitterstegen (21.3_G) besteht, die parallel zueinander entlang der beiden Gitterrichtungen (GR1, GR2) angeordnet sind und zumindest teilweise unterschiedliche Stegbreiten aufweisen, und,
    - **dass** die Amplitudengitterstrukturen (21.3) in Gitterbereichen (21.1, 21.2), die entlang einer Gitterrichtung (GR1, GR2) benachbart angeordnet sind, jeweils spiegelsymmetrisch zu einer Symmetrieachse (SG1, SG2, SG3, SG4) ausgebildet sind, die entlang der Grenze der benachbarten Gitterbereiche (21.1, 21.2) verläuft.

15. Positionsmesssystem nach mindestens einem der vorhergehenden Ansprüche, **dadurch gekennzeichnet, dass** die Lichtquelle (LQ) als LED ausgebildet ist, die Strahlung im Wellenlängenbereich $\lambda$ = 850nm +/-20nm emittiert und eine Kohärenzlänge kleiner gleich 7$\mu$m besitzt.

## Claims

1.  Position measuring system for determining spatial position information comprising at least one light source and at least one optical receiving unit comprising a scanning grating and an optoelectronic detector arrangement, the light-sensitive surfaces of which are oriented in the direction of the scanning grating, **characterized**

    - **in that** the detector arrangement (D; 25) has two detector regions (25.1, 25.2) arranged in a detection plane (DE) mirror-symmetrically with respect to a first axis of symmetry (S1) running in the detection plane (DE) through the centre (Z) of the detector arrangement (D; 25), the first axis of symmetry (S1) being oriented orthogonally with respect to the longitudinal extension direction (y) of the detector regions (25.1, 25.2), and
    - **in that** the two detector regions (25.1, 25.2) each have the shape of an isosceles acute triangle whose triangular vertices with the vertex angle ($\gamma$) situated between the sides of equal length are oriented in the direction of the centre (Z) of the detector arrangement (D; 25).

2.  Position measuring system according to Claim 1, **characterized in that** the detector arrangement (D; 25) has two further detector regions (25.3, 25.4), which are embodied identically to the first two detector regions (25.1, 25.2) and are arranged mirror-symmetrically with respect to a second axis of symmetry (S2), which runs in the detection plane (DE) through the centre (Z) of the detector arrangement (D; 25) and is oriented orthogonally with respect to the first axis of symmetry (S1).

3. Position measuring system according to Claim 1 or 2, **characterized**

   - **in that** the triangles each have a vertex angle $\gamma$ for which $\gamma/2 = 7.125° +/- 5°$ holds true, and
   - **in that** the triangular vertices with the vertex angle ($\gamma$) touch one another in the centre (Z) of the detector arrangement (D; 25).

4. Position measuring system according to at least one of the preceding claims, **characterized in that** in each detector region (25.1 - 25.4) a plurality of individual detector elements (25.1_DE) are arranged periodically and parallel to one another along an arrangement direction (x, y) oriented perpendicularly to the longitudinal extension direction (y, x) of the detector regions (25.1 - 25.4).

5. Position measuring system according to Claim 4, **characterized**

   - **in that** the detector elements (25.1_DE) are each rectangular in shape and the rectangular longitudinal axes are oriented parallel to the longitudinal extension direction (y, x) of the detector region (25.1 - 25.4), and
   - **in that** every fourth detector element (25.1_DE) is electrically interconnected along the arrangement direction (x, y), so that four phase-shifted output signals (A, B, C, D) for further processing result from the scanning of a stripe pattern (SM) incident on the detector arrangement (D; 25).

6. Position measuring system according to Claim 5, **characterized in that** the ratio of detector element width (b_D) and detector element periodicity (P_D) is 1:7.

7. Position measuring system according to Claim 5, **characterized in that** for the change in the detector element length (h_D) along the arrangement direction (x) it holds true that $dh\_D / dx = +/- 8$, where

   h_D := detector element length,
   x := arrangement direction.

8. Position measuring system according to at least one of the preceding claims, **characterized in that** the scanning grating (AG; 21) is arranged in a plane parallel to the detection plane (DE) and consists of a periodic arrangement of grating regions (21.1, 21.2) along at least one grating direction (GR1, GR2), wherein the grating direction (GR1, GR2) forms an angle of 45° relative to the longitudinal extension direction (y, x) of the detector regions (25.1 - 25.4).

9. Position measuring system according to at least one of the preceding claims, **characterized in that** the scanning grating (AG; 21) is embodied as a transmissive, combined amplitude-phase grating, wherein

   - an identically formed, opaque amplitude grating structure (21.3) is arranged in each grating region (21.1, 21.2), and
   - a phase shift layer (21.5) is arranged along each grating direction (GR1, GR2) in every second grating region above the amplitude grating structure (21.3).

10. Position measuring system according to Claim 9, **characterized in that** the phase shift layer (21.5) is embodied with respect to the material and the layer thickness (h) in such a way as to result in extensive suppression of the 0th order of diffraction and of all even orders of diffraction for a specific wavelength range and for a specific angle of incidence range.

11. Position measuring system according to Claim 9 or 10, **characterized in that** the amplitude grating structure (21.3) is embodied in such a way that, for a specific wavelength range, this results in a preferred transmission into the +/- 1st orders of diffraction and extensive suppression of odd orders of diffraction.

12. Position measuring system according to at least one of the preceding claims, **characterized in that** the scanning grating (AG; 21) is arranged on that side of a transparent cover plate (DP) of the receiving unit (OE) which is oriented in the direction of the detector arrangement (D; 25).

13. Position measuring system according to at least one of Claims 9 - 11, **characterized in that** the combined amplitude-phase grating has a chequerboard structure with a periodic arrangement of square grating regions (GR1, GR2) along two orthogonal grating directions (GR1, GR2).

14. Position measuring system according to Claim 13, **characterized**

   - **in that** the amplitude grating structure (21.3) consists of opaque grating ridges (21.3_G) which are arranged parallel to one another along the two grating directions (GR1, GR2) and have at least partially different ridge widths, and
- **in that** the amplitude grating structures (21.3) in grating regions (21.1, 21.2) arranged adjacent along a grating direction (GR1, GR2) are each embodied mirror-symmetrically with respect to an axis of symmetry (SG1, SG2, SG3, SG4) running along the boundary of the adjacent grating regions (21.1, 21.2).

15. Position measuring system according to at least one of the preceding claims, **characterized in that** the light source (LQ) is embodied as an LED which emits radiation in the wavelength range $\lambda$ = 850 nm +/- 20 nm and has a coherence length of less than or equal to 7 $\mu$m.

## Revendications

1. Système de mesure de position destiné à déterminer des informations de position spatiale, comprenant au moins une source de lumière ainsi qu'au moins une unité de réception optique qui comporte un réseau de balayage et un arrangement détecteur optoélectronique dont les surfaces photosensibles sont orientées en direction du réseau de balayage, **caractérisé en ce**

   - **que** l'arrangement détecteur (D ; 25) possède deux zones de détecteur (25.1, 25.2) qui sont disposées selon une symétrique en miroir dans un plan de détection (DE) par rapport à un premier axe de symétrie (S1), lequel suit un tracé dans le plan de détection (DE) à travers le centre (Z) de l'arrangement détecteur (D ; 25), le premier axe de symétrie (S1) étant orienté orthogonalement à la direction d'extension longitudinale (y) des zones de détection (25.1, 25.2), et
   - **que** les deux zones de détecteur (25.1, 25.2) présentent respectivement la forme d'un triangle acutangle isocèle, dont les sommets de triangle avec l'angle de sommet ($\gamma$) qui se trouve entre les côtés isocèles sont orientés vers le centre (Z) de l'arrangement détecteur (D ; 25).

2. Système de mesure de position selon la revendication 1, **caractérisé en ce que** l'arrangement détecteur (D ; 25) possède deux zones de détecteur supplémentaires (25.3, 25.4), qui sont de configuration identique aux deux premières zones de détecteur (25.1, 25.2) et qui sont disposées selon une symétrique en miroir par rapport à un deuxième axe de symétrie (S2), lequel suit un tracé dans le plan de détection (DE) à travers le centre (Z) de l'arrangement détecteur (D ; 25) et est orienté orthogonalement par rapport au premier axe de symétrie (S1) .

3. Système de mesure de position selon la revendication 1 ou 2, **caractérisé en ce**

   - **que** les triangles présentent respectivement un angle de sommet $\gamma$, pour lequel s'applique $\gamma/2$ = 7,125° +/- 5°, et
   - **que** les sommets de triangle ayant l'angle de sommet ($\gamma$) se touchent au centre (Z) de l'arrangement détecteur (D ; 25).

4. Système de mesure de position selon au moins une des revendications précédentes, **caractérisé en ce que**, dans chaque zone de détecteur (25.1 - 25.4) sont disposés une pluralité d'éléments détecteurs (25.1DE) individuels périodiquement et parallèlement les uns aux autres le long d'un sens d'arrangement (x, y), lequel est orienté perpendiculairement à la direction d'extension longitudinale (y, x) des zones de détecteur (25.1 - 25.4).

5. Système de mesure de position selon la revendication 4, **caractérisé en ce**

   - **que** les éléments détecteurs (25.1_DE) sont respectivement de configuration rectangulaire et les axes longitudinaux de rectangle sont orientés parallèlement à la direction d'extension longitudinale (y, x) de la zone de détecteur (25.1 - 25.4), et
   - **que** chaque quatrième élément détecteur (25.1_DE) est connecté électriquement ensemble le long du sens d'arrangement (x, y), de sorte que le balayage d'un motif en bande (SM) incident sur l'arrangement détecteur (D ; 25) produit quatre signaux de sortie déphasés (A, B, C, D) pour un traitement ultérieur.

6. Système de mesure de position selon la revendication 5, **caractérisé en ce que** le rapport entre la largeur de l'élément détecteur (b_D) et la périodicité de l'élément détecteur (P_D) est de 1:7.

7. Système de mesure de position selon la revendication 5, **caractérisé en ce que** la relation suivante s'applique pour la modification de la longueur de l'élément détecteur (h_D) le long du sens d'arrangement dh_D / dx = +/- 8 où

   h_D = longueur de l'élément détecteur,
   x = direction d'arrangement.

8. Système de mesure de position selon au moins l'une des revendications précédentes, **caractérisé en ce que** le réseau de balayage (AG ; 21) est disposé dans un plan parallèle au plan de détection (DE) et consiste en un arrangement périodique de zones de réseau (21.1, 21.2) le long d'au moins une direction de réseau (GR1, GR2), la direction de réseau (GR1, GR2) formant un angle de 45° par rapport à la direction d'extension longitudinale (y, x) des zones de détecteur (25.1 - 25.4).

9. Système de mesure de position selon au moins l'une des revendications précédentes, **caractérisé en ce que** le réseau de balayage (AG ; 21) est réalisé sous la forme d'un réseau combiné transmissif d'amplitude et de phase,

- une structure de réseau d'amplitude (21.3) opaque de configuration identique étant disposée dans chaque zone de réseau (21.1, 21.2), et
- une couche de déphasage (21.5) étant disposée le long de chaque direction de réseau (GR1, GR2) dans chaque deuxième zone de réseau au-dessus de la structure de réseau d'amplitude (21.3).

10. Système de mesure de position selon la revendication 9, **caractérisé en ce que** la couche de déphasage (21.5) est configurée, en termes de matériau et d'épaisseur de couche (h), de telle sorte qu'il en résulte une suppression dans une large mesure du 0e ordre de diffraction ainsi que tous les ordres de diffraction pairs pour une plage de longueurs d'onde déterminée et pour une plage d'angles d'incidence déterminée.

11. Système de mesure de position selon la revendication 9 ou 10, **caractérisé en ce que** la structure de réseau d'amplitude (21.3) est configurée de telle sorte qu'il résulte, pour une plage de longueurs d'onde donnée, une transmission préférentielle dans les +/- 1e ordres de diffraction et une suppression dans une large mesure des ordres de diffraction impairs.

12. Système de mesure de position selon au moins l'une des revendications précédentes, **caractérisé en ce que** le réseau de balayage (AG ; 21) est disposé sur le côté d'une plaque de couverture transparente (DP) de l'unité de réception (OE) qui est orienté vers l'arrangement détecteur (D ; 25).

13. Système de mesure de position selon au moins l'une des revendications 9 à 11, **caractérisé en ce que** le réseau combiné d'amplitude et de phase présente une structure en échiquier avec un arrangement périodique de zones de réseau (GR1, GR2) carrées le long de deux directions de réseau (GR1, GR2) orthogonales.

14. Système de mesure de position selon la revendication 13, **caractérisé en ce**

- **que** la structure de réseau d'amplitude (21.3) est constituée de nervures de réseau (21.3_G) opaques qui sont disposées parallèlement les unes aux autres le long des deux directions de réseau (GR1, GR2) et présentent au moins en partie des largeurs de nervure différentes, et
- **que** les structures de réseau d'amplitude (21.3), dans les zones de réseau (21.1, 21.2) qui sont disposées de manière adjacente le long d'une direction de réseau (GR1, GR2), sont respectivement configurées selon une symétrie en miroir par rapport à un axe de symétrie (SG1, SG2, SG3, SG4) qui suit un tracé le long de la limite des zones de réseau (21.1, 21.2) adjacentes.

15. Système de mesure de position selon au moins l'une des revendications précédentes, **caractérisé en ce que** la source de lumière (LQ) est réalisée sous la forme d'une LED, qui émet un rayonnement dans la gamme de longueurs d'onde $\lambda = 850$ nm +/- 20 nm et possède une longueur de cohérence inférieure ou égale à 7 $\mu$m.

FIG. 1

# FIG. 2a

# FIG. 2b

FIG. 3

FIG. 4a

FIG. 4b

FIG. 5

EP 4 524 517 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0138828 A1
- EP 4145083 A1